# EUROPÄISCHE PATENTSCHRIFT

(11) **EP 3 798 330 B1**
(45) Veröffentlichungstag und Bekanntmachung des Hinweises auf die Patenterteilung: **31.08.2022**
(21) Anmeldenummer: 19200051.1
(22) Anmeldetag: 27.09.2019
(51) Int. Cl.: C23C 4/12, C23C 4/123, C23C 4/134, C23C 24/10, B22F 3/105, B22F 7/08, B23K 26/14, B23K 26/16, B23K 26/342, B05B 7/22, B05B 13/02, B05B 14/30, B05C 9/04, F16D 65/00

(54) **VERFAHREN UND ANLAGE ZUM METALLISCHEN BESCHICHTEN**
METHOD AND INSTALLATION FOR METALLIC COATING
PROCÉDÉ ET INSTALLATION DE REVÊTEMENT MÉTALLIQUE

(30) Priorität: 09.09.2019 EP 19196156
(43) Veröffentlichungstag der Anmeldung: 31.03.2021
(73) Patentinhaber: Sturm Maschinen- & Anlagenbau GmbH, 94330 Salching (DE)
(72) Erfinder: MARTIN, Carlos, 94469 Deggendorf (DE); BAIER, Roland, 93077 Bad Abbach (DE)
(74) Vertreter: Wunderlich & Heim Patentanwälte Partnerschaftsgesellschaft mbB

(56) Entgegenhaltungen:
- WO-A1-2019/030839
- CN-A- 108 098 146
- DE-A1-102018 106 362
- US-A1- 2017 266 886
- US-A1- 2017 349 991

## Beschreibung

### VERFAHREN UND ANLAGE ZUM METALLISCHEN BESCHICHTEN

Die Erfindung betrifft ein Verfahren zum metallischen Beschichten mindestens einer Fläche eines Werkstücks gemäß dem Anspruch 1.

Die Erfindung betrifft weiterhin eine Anlage zum metallischen Beschichten mindestens einer Fläche eines Werkstücks gemäß dem Anspruch 10.

Seit längerem sind Anlagen und Verfahren zum Beschichten von Werkstücken mit einer Beschichtungsvorrichtung bekannt, durch die eine metallische Beschichtung auf eine Werkstückfläche aufgebracht wird. Solche Beschichtungsvorrichtungen sind etwa bei der Beschichtung von Zylinderbohrungen in Motorblöcken im Einsatz, wobei ein Plasma-Spritzverfahren, ein Thermo-Spritzverfahren oder andere Metallbeschichtungsverfahren zum Einsatz kommen.

Aus der EP 3 048 181 B1 (Basis des Oberbegriffs der Ansprüche 1 und 10) der Anmelderin ist ein Verfahren und eine Anlage zur metallischen Beschichtung von Werkstücken bekannt, bei welchem ein Motorblock mit zu beschichtenden Zylinderbohrungen auf einem Drehtisch angeordnet wird, mit welchem das Werkstück zwischen einer Ladestation und einer Bearbeitungsstation verschwenkt werden kann. Der Motorblock wird dabei in der Ladestation aufgenommen, wobei die Zylinderbohrungen vor einem Beschichten mit einer Messeinrichtung gemessen werden. Hierbei kann eine Oberflächenstruktur aufgenommen werden. Anschließend wird der Motorblock in die Beschichtungsposition verschwenkt, wobei eine metallische Beschichtung auf die zylindrischen Bohrungsflächen mittels Plasmaspritzen aufgebracht wird. Gleichzeitig wird beim Einschwenken des Motorblocks in die Beschichtungsposition ein fertig beschichteter Motorblock zurück in die Ladeposition verschwenkt. Der beschichtete Motorblock wird dabei vor dem Entladen aus der Ladestation mit der gleichen Messeinrichtung vermessen. Aus einem Vergleich der Oberflächenstruktur vor und nach dem Beschichten kann eine genaue Bestimmung der Schichtdicke und des Schichtdickenverlaufs ermittelt werden.

Der Erfindung liegt die **Aufgabe** zugrunde, ein Verfahren und eine Anlage zum metallischen Beschichten von Werkstücken anzugeben, mit welchem mit besonders guter Effizienz eine Beschichtung mit einem gewünschten Oberflächenverlauf aufgebracht werden kann.

Die Aufgabe wird nach der Erfindung zum einen durch ein Verfahren mit den Merkmalen des Anspruches 1 und zum anderen durch eine Anlage mit den Merkmalen des Anspruches 10 gelöst. Bevorzugte Ausführungsformen der Erfindung sind in den abhängigen Ansprüchen angegeben.

Bei dem erfindungsgemäßen Verfahren zum metallischen Beschichten mindestens einer Fläche eines Werkstücks ist vorgesehen, vor dem Beschichten eine Oberflächenstruktur mit Höhen und Tiefen der zu beschichtenden Oberfläche mittels einer Messeinrichtung zu erfassen, das Beschichten mittels mindestens einer Auftragseinrichtung durchzuführen, welche relativ zu der Fläche bewegt und dabei Beschichtungsmaterial aufgebracht wird, und die Auftragseinrichtung von einer Steuereinrichtung abhängig von der erfassten Oberflächenstruktur zu steuern, wobei im Bereich von Tiefen mehr Material und im Bereich von Höhen weniger Material aufgebracht wird.

Die Erfindung beruht auf der Erkenntnis, dass zu beschichtende Werkstücke abhängig von der Art der Vorbearbeitung, welche ein Gießen, Stanzen, Schmieden und insbesondere eine spanabhebende Bearbeitung umfassen kann, eine makroskopisch raue Oberflächenstruktur mit Höhen und Tiefen aufweisen können. Bei dem Aufbringen einer Beschichtung mit hoher Beschichtungsgenauigkeit kann eine derartige raue Oberflächenstruktur im Wesentlichen weiter bestehen oder sich noch auf der Oberflächenstruktur der beschichteten Fläche stärker ausbilden. Um dem entgegenzuwirken, wird nach der Erfindung das Auftragen der Beschichtung durch eine Steuereinrichtung abhängig von den erfassten Werten zur Oberflächenstruktur gesteuert. Die Steuerung erfolgt dabei so, dass lokal in den Bereichen, in welchen Tiefen in der Oberflächenstruktur des Werkstücks gegeben sind, mehr Material aufgebracht wird, während in den Bereichen, in welchen höhere oder herausragende Strukturen gegeben sind, lokal weniger Material beim Beschichten aufgebracht wird. Hierdurch können selbst relativ große Oberflächenmaßschwankungen an einer zu beschichtenden Fläche eines Werkstücks weitgehend ausgeglichen werden, wobei auch ein gewünschter definierter Oberflächenverlauf der beschichteten Fläche eingestellt werden kann.

Durch das erfindungsgemäße Verfahren können Werkstücke verarbeitet werden, bei denen die zu beschichtende Fläche weniger genau vorbearbeitet sein muss. Auch können durch einen differenzierten Materialauftrag der Verbrauch an Beschichtungsmaterial und der Aufwand zum Beschichten reduziert werden.

Zudem kann ein erforderlicher Aufwand für eine eventuelle Nachbearbeitung der beschichteten Fläche verringert werden. All dies reduziert den Fertigungsaufwand und spart Kosten.

Grundsätzlich kann mit dem Verfahren ein nahezu beliebiger Oberflächenverlauf der beschichteten Fläche eingestellt werden. Besonders bevorzugt ist es nach einer Verfahrensvariante der Erfindung, dass beim Beschichten eine im Wesentlichen ebene Oberfläche gebildet wird. Dies kann insbesondere beim Beschichten von Bremsscheiben gewünscht sein, so dass diese im Betrieb bereits von Anfang an eine hohe Rundlaufgenauigkeit und eine hohe Bremsleistung sicherstellen.

Erfindungsgemäß wird das Beschichten durch ein Laserauftragsschweißen durchgeführt. So können besonders robuste und stabile Beschichtungen erstellt werden.

Erfindungsgemäß wird beim Laserauftragsschweißen mittels der Auftragseinrichtung Metallpulver auf die zu beschichtende Fläche aufgetragen und mittels eines Lasers wird das aufgebrachte Metallpulver lokal aufgeschmolzen, wobei die Beschichtung gebildet wird. Das Metallpulver kann dabei durch eine oder mehrere Auftragsdüsen auf eine zu beschichtende Stelle an dem Werkstück aufgebracht werden. Gleichzeitig kann mittels eines Lasers das aufgebrachte Metallpulver gezielt an der Stelle aufgeschmolzen und so die Beschichtung gebildet werden. Wenn zum Vermessen der Oberflächenstruktur ein Messlaser eingesetzt wird, so kann der Laser der Beschichtungseinrichtung genau dem Weg folgen, entlang welchem auch der Messlaser über die zu beschichtende Fläche verfahren wurde.

Erfindungsgemäß wird dabei, dass beim Beschichten die Menge des aufgebrachten Metallpulvers und/oder eine Leistung des Lasers durch die Steuereinrichtung gesteuert werden. Hierdurch kann ein Verbrauch an Metallpulver und auch der Energieaufwand des Lasers besonders effizient eingestellt werden.

Eine besonders hohe Beschichtungsleistung wird gemäß einer Weiterbildung der Erfindung dadurch erzielt, dass zumindest zwei Auftragseinrichtungen gleichzeitig an dem Werkstück eine Beschichtung auftragen. Entsprechend der Anzahl der Auftragseinrichtungen kann sich somit die Bearbeitungszeit verkürzen.

Besonders bevorzugt ist es dabei, dass das Werkstück scheibenförmig oder plattenförmig gebildet ist und dass ein Beschichten an zwei gegenüberliegenden Flächen erfolgt. Hierdurch können Querkräfte und insbesondere auch thermische Spannungen im Werkstück kompensiert werden.

Eine besonders gute Kompensation kann dabei dadurch erzielt werden, dass sich die Auftragseinrichtungen unmittelbar gegenüberliegen und das Beschichten auf beiden Seiten gleichzeitig durchgeführt wird.

Grundsätzlich kann das Werkstück beim Beschichten beliebig angeordnet sein, insbesondere kann die zu beschichtende Fläche horizontal angeordnet werden. Eine besonders vorteilhafte Ausgestaltung des erfindungsgemäßen Verfahrens besteht darin, dass beim Beschichten die zu beschichtende Fläche etwa parallel zur Schwerkraftwirkung ausgerichtet wird. Insbesondere beim Auftrag von Metallpulver mit gleichzeitiger Einwirkung eines Lasers wird bei einer derartigen Werkstückanordnung bewirkt, dass nicht aufgeschmolzenes Metallpulver unmittelbar von der zu beschichtenden Fläche nach unten abgeführt wird und im Vergleich zu einer horizontalen Anordnung der Fläche sich keine oder kaum unerwünschte Anhäufungen von Metallpulver an der zu beschichtenden Fläche auftreten.

Nach einer weiteren Ausführungsvariante des erfindungsgemäßen Verfahrens ist es vorgesehen, dass nach dem Beschichten die beschichtete Fläche mittels einer Ausgangsmesseinrichtung vermessen wird, wobei eine Oberflächenstruktur erfasst wird. Die Ausgangsmesseinrichtung kann dabei dieselbe Messeinrichtung sein, wie sie für die Eingangsmessung vorgesehen wird, oder eine eigenständige Messeinrichtung. Insbesondere kann ein Vermessen der Oberflächenstruktur sowohl bei der Eingangsmessung als auch bei der Ausgangsmessung mittels eines Messlasers durchgeführt werden. In einer Steuereinrichtung kann die Oberflächenstruktur der unbeschichteten Fläche mit der Oberflächenstruktur der beschichteten Fläche verglichen werden. Hierdurch kann zuverlässig eine Schichtdicke ermittelt werden. Auch können mögliche Fehlstellen oder Abweichungen ermittelt werden, welche beim Beschichten aufgetreten sind. Durch die Steuereinrichtung kann abhängig von diesen Mess- und Vergleichswerten eine Veränderung der Beschichtungsparameter oder eine Wartung der Beschichtungsvorrichtung mit der Auftragseinrichtung ermitteln beziehungsweise veranlassen.

Zum Erzielen einer besonders formgenauen beschichteten Fläche ist es nach einer Weiterbildung der Erfindung vorgesehen, dass eine materialabtragende Nachbearbeitung der beschichteten Fläche durchgeführt wird, wobei ein materialabtragendes Werkzeug abhängig von der in der Ausgangsmesseinrichtung erfassten Oberflächenstruktur an das Werkstück zugeführt wird. Mittels einer Steuereinrichtung kann insbesondere das materialabtragende Werkzeug abhängig von der gemessenen Oberflächenstruktur der beschichteten Fläche so zugestellt werden, dass eine gewünschte Enddicke gegeben ist und dass eventuell verbliebene und unerwünschte Niveauunterschiede an der beschichteten Fläche entfernt werden.

Besonders zweckmäßig ist es dabei, dass das Nachbearbeiten ein Schleifen, Honen, Läppen und/oder Polieren umfasst. Auch andere spanabhebende Bearbeitungsverfahren, etwa ein Abtragen mittels Lasers kann grundsätzlich ebenfalls zum Einsatz kommen.

Weiterhin umfasst die Erfindung eine Anlage zum metallischen Beschichten mindestens einer Fläche eines Werkstücks, wobei die Anlage eine Messeinrichtung, mit welcher eine Oberflächenstruktur mit Höhen und Tiefen der zu beschichtenden Fläche erfasst wird, mindestens eine Auftragseinrichtung zum Auftragen einer Beschichtung, wobei die Auftragseinrichtung beim Beschichten relativ zu der Fläche des Werkstücks bewegbar ist, und eine Steuereinrichtung umfasst, welche ausgebildet ist, die Auftragseinrichtung abhängig von der erfassten Oberflächenstruktur zu steuern, wobei im Bereich von Tiefen mehr Material und im Bereich von Höhen weniger Material aufgebracht wird.

Mit dieser Anlage kann insbesondere das zuvor beschriebene Verfahren durchgeführt werden. Es können die dabei beschriebenen Vorteile erzielt werden.

Die Auftragseinrichtung ist dabei insbesondere zum Ausführen eines Laserauftragsschweißens ausgebildet.

In vorteilhafter Weise ist eine Ausgangsmesseinrichtung vorgesehen, durch welche eine Oberflächenstruktur der beschichteten Fläche erfassbar ist. Die Ausgangseinrichtung ist insbesondere getrennt von der Eingangsmesseinrichtung angeordnet. Mittels einer Steuereinrichtung, welche sowohl mit der Messeinrichtung für die Eingangsmessung und die Ausgangsmesseinrichtung verbunden ist, kann beispielsweise die aufgebrachte Schichtdicke ermittelt werden.

Eine weitere bevorzugte Ausführung der erfindungsgemäßen Anlage besteht darin, dass eine Nachbearbeitungsstation mit mindestens einer materialabtragenden Bearbeitungsvorrichtung angeordnet ist. Die materialabtragende Bearbeitungsvorrichtung kann dabei insbesondere eine Schleifvorrichtung sein.

Nachfolgend wird die Erfindung anhand von bevorzugten Ausführungsbeispielen näher erläutert, welche schematisch in den Zeichnungen dargestellt sind. In den Zeichnungen zeigen:
- Fig.1: eine schematische Darstellung einer erfindungsgemäßen Anlage;
- Fig. 2: eine schematische Darstellung zum Beschichten eines Werkstücks nach der Erfindung;
- Fig. 3: eine perspektivische Ansicht einer weiteren erfindungsgemäßen Anlage basierend auf der Anlage gemäß Fig. 1;
- Fig. 4: eine schematische Darstellung zu einer Messanordnung; und
- Fig. 5: eine schematische Darstellung zum Ergebnis eines erfindungsgemäßen Beschichtens.

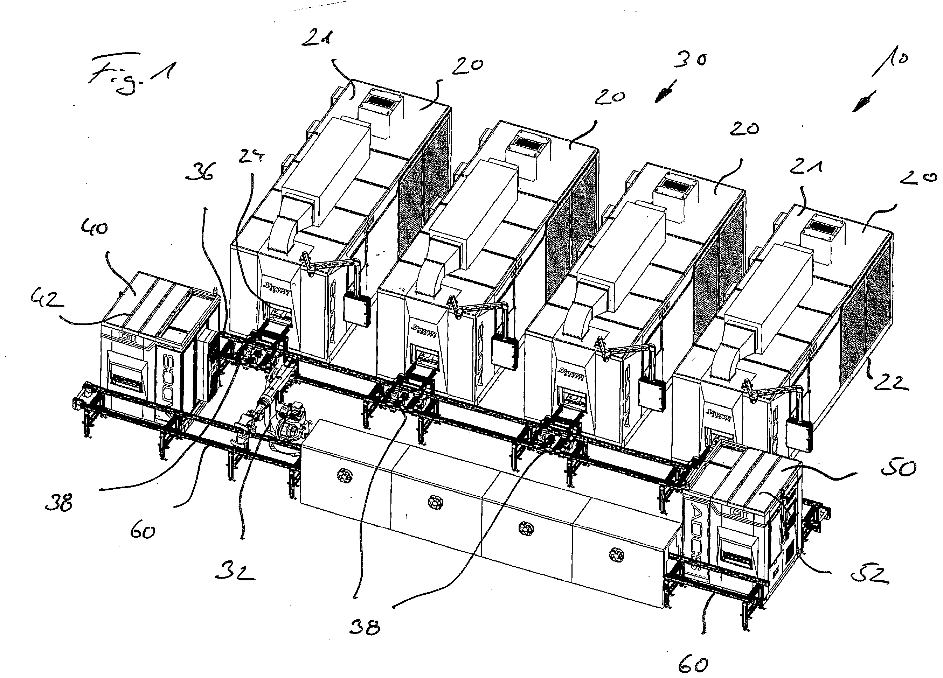

Ein erstes Ausführungsbeispiel einer erfindungsgemäßen Anlage 10 ist in Fig. 1 dargestellt. Diese umfasst vier Beschichtungsmodule 20, welche in einer Parallelanordnung nebeneinander eine Modulgruppe 30 bilden. Der Modulgruppe 30 vorgeschaltet ist eine Eingangsmessstation 40, zu welcher hier nicht dargestellte Werkstücke mittels einer Hauptfördereinrichtung 60 zugefördert werden. Mittels einer Handhabungseinrichtung 32, welche im vorliegenden Ausführungsbeispiel als ein Mehrachsroboter ausgeführt ist, werden die Werkstücke von der Hauptfördereinrichtung 60 ergriffen und der kastenförmigen Eingangsmessstation 40 zugeführt.

In der Eingangsmessstation 40 werden die Werkstücke mit der Messeinrichtung 42 vermessen, insbesondere eine zu beschichtende Oberfläche. Hierbei kann insbesondere eine Oberflächenstruktur der zu beschichtenden Fläche erfasst werden, wobei insbesondere Höhen und Tiefen in der Oberfläche erfasst und vermessen werden.

Anschließend kann das vermessene Werkstück aus der Eingangsmessstation 40 über die Handhabungseinrichtung 32 oder direkt aus der Eingangsmessstation 40 an eine lineare Fördereinrichtung 36 übergeben werden, welche entlang der Beschichtungsmodule 20 verläuft. Vor jedem Beschichtungsmodul 20 ist an der als Linearförderer ausgebildeten Fördereinrichtung 36 eine Zuführeinrichtung 38 angeordnet, mit welcher ein Werkstück in eine Eintrittsöffnung 24 in einem kastenförmigen Gehäuse 21 des ausgewählten Beschichtungsmoduls 20 eingeführt wird.

Die Beschichtungsmodule 20 sind gleich oder im Wesentlichen gleich ausgebildet und weisen einen Transportrahmen 22 auf. Mit diesem Transportrahmen 22 können die Beschichtungsmodule 20 mit einem Hallenkran oder einem Hubstapler bewegt und versetzt werden. Dies ermöglicht es, etwa im Falle einer Kapazitätsänderung zusätzliche Beschichtungsmodule 20 zuzufügen oder abzuführen oder zu Reparatur- oder Wartungszwecken ein bestehende Beschichtungsmodul 20 durch ein neues Beschichtungsmodul 20 auszutauschen.

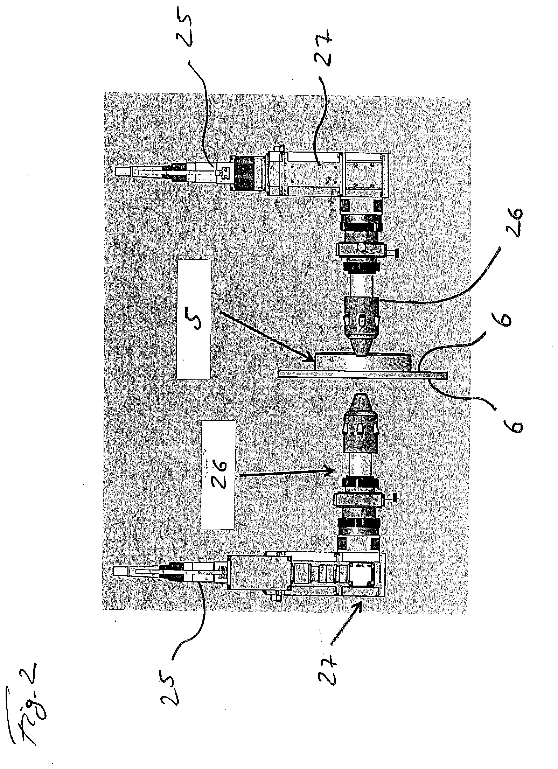

In dem Beschichtungsmodul 20 wird mindestens eine Fläche des Werkstücks 20 mit einer metallischen Beschichtung versehen, wie nachfolgend näher im Zusammenhang mit Fig. 2 erläutert werden wird. Nach der Beschichtung wird das Werkstück durch die Eintrittsöffnung 24 zurück auf die Fördereinrichtung 36 geleitet. Dies kann ebenfalls mit der Zuführeinrichtung 38 erfolgen. Durch die Fördereinrichtung 36 wird das beschichtete Werkstück zu einer gemeinsamen Ausgangsmessstation 50 transportiert, in welcher die beschichtete Oberfläche des Werkstücks vermessen wird. Nach diesem abschließenden Vermessen in der Ausgangsmessstation 50 mittels einer Ausgangsmesseinrichtung 52 wird das Werkstück zurück auf die Hauptfördereinrichtung 60 gesetzt, mit welcher das Werkstück zu einer weiteren Bearbeitung gefördert werden kann. Das Übertragen des Werkstücks von der Fördereinrichtung 36 in die Ausgangsmessstation 50 und wieder auf die Hauptfördereinrichtung 60 kann ebenfalls über eine Handhabungseinrichtung 32 wie an der Eingangsmessstation 40 erfolgen, wobei diese in Fig. 1 nicht dargestellt ist.

Die in der Eingangsmessstation 40 ermittelten Messwerte zu einem bestimmten Werkstück werden an eine zentrale Steuereinrichtung übermittelt. Durch die Steuereinrichtung wird auch die Fördereinrichtung 36 mit der jeweiligen Zuführeinrichtung 38 gesteuert, so dass das vermessene Werkstück einem bestimmten Beschichtungsmodul 20 der Modulgruppe 30 zugeleitet wird. Gleichzeitig werden dem ausgewählten oder bestimmten Beschichtungsmodul 20 von der Steuereinrichtung die Messwerte des bestimmten Werkstückes zugeleitet, so dass eine Beschichtung des Werkstücks abhängig von den Eingangsmesswerten erfolgen kann. Nach dem Beschichten wird das Werkstück in der kastenförmigen Ausgangsmessstation 50 vermessen, wobei die ermittelten Messwerte ebenfalls der zentralen Steuereinrichtung und dem Datensatz zu dem bestimmten Werkstück zugeleitet werden. In der Steuereinrichtung kann ein Vergleich der Eingangsmesswerte und der Ausgangsmesswerte sowie der Beschichtungsparameter durchgeführt werden, um festzustellen, ob eine korrekte Beschichtung erfolgt ist. Gegebenenfalls kann durch die Steuereinrichtung eine Nachstellung von Betriebsparametern eines Beschichtungsmoduls 20 beim Beschichten durchgeführt werden.

Gemäß Fig. 2 kann als zu beschichtendes Werkstück 5 ein scheibenförmiges Element vorgesehen sein, insbesondere eine Bremsscheibe mit einer oder zwei zu beschichtenden Flächen 6. Das Aufbringen der metallischen Beschichtung kann durch zwei Auftragseinrichtungen 25 mit je einer Beschichtungsdüse 26 mittels Laserauftragsschweißen durchgeführt werden. Die Beschichtungsdüse 26 ist an einem Träger 27 angeordnet.

Beim Auftragsschweißen wird zunächst Beschichtungsmaterial, insbesondere ein Metallpulver, aufgebracht und dann mittels Laser lokal aufgeschmolzen. Dabei kann das Beschichten in mehreren Schritten und in mehreren Schichten erfolgen. Insbesondere können die Schichten auch mit unterschiedlichen Schichtdicken mit unterschiedlichen Materialien und unterschiedlichen Verfahren aufgebracht werden, um gewünschte Eigenschaften zu erreichen, insbesondere hinsichtlich Anhaftung, Abriebfestigkeit und/oder Korrosionsbeständigkeit.

Grundsätzlich ist es möglich, die Beschichtung mit einer Beschichtungsdüse 26 vorzunehmen, welche mittels des Trägers 27 entlang der zu beschichtenden Flächen 6 verfahren wird.

Bevorzugt ist es, wie in Fig. 2 dargestellt, die Beschichtung auf zwei Flächen 6 des scheibenförmigen Werkstücks 5 gleichzeitig durch zwei Beschichtungseinrichtungen 25 aufzutragen, welche unmittelbar gegenüberliegend angeordnet sind.

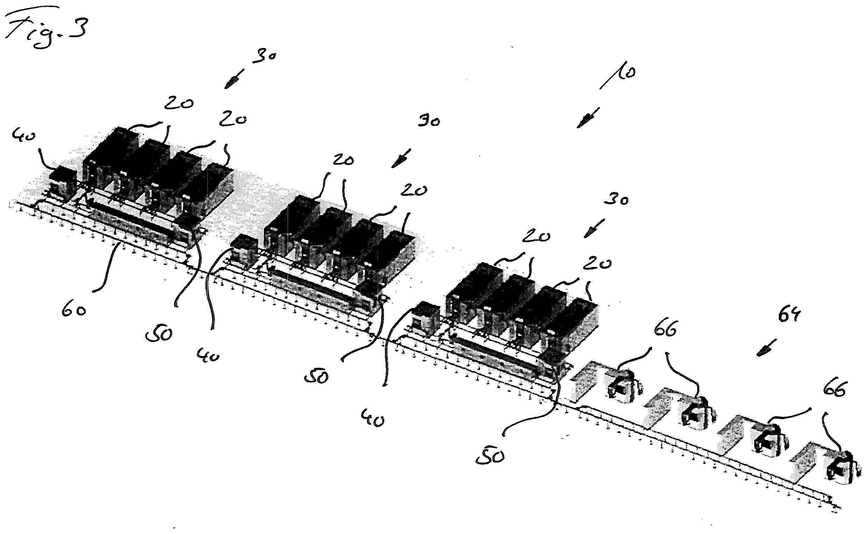

Eine Weiterbildung einer erfindungsgemäßen Anlage 10 mit insgesamt drei Modulgruppen 30 aus je vier Beschichtungsmodulen 20 ist in Fig. 3 dargestellt. Die einzelnen Modulgruppen 30 sind dabei entsprechend dem Ausführungsbeispiel gemäß Fig. 1 ausgebildet, wobei in jeder Modulgruppe 30 eine Eingangsmessstation 40 und eine Ausgangsmessstation 50 zugeordnet sind. Die insgesamt drei Modulgruppen 30 sind entlang einer linearen Hauptfördereinrichtung 60 angeordnet, so dass bei dieser Parallelanordnung eine parallele Bearbeitung von Werkstücken in den einzelnen Modulgruppen 30 und in den einzelnen Bearbeitungsmodulen 20 erfolgen kann. Ein fertig beschichtetes Werkstück wird nach Durchgang durch die jeweilige Ausgangsmessstation 50 zurück auf die Hauptfördereinrichtung 60 geleitet, mit welcher das Werkstück einer Nachbearbeitungsstation 64 zugeleitet wird.

In dem dargestellten Ausführungsbeispiel gemäß Fig. 3 weist die Nachbearbeitungsstation 64 insgesamt vier parallel angeordnete Nachbearbeitungsvorrichtungen 66 auf, insbesondere Schleifvorrichtungen. Mit den Schleifvorrichtungen kann die mindestens eine beschichtete Fläche des Werkstücks abschließend bearbeitet und beschliffen werden. Um eine effiziente Nachbearbeitung sicherzustellen, können die erfassten Messwerte zu jedem Werkstück der bestimmten Schleifvorrichtung in der Nachbearbeitungsstation 64 zugeleitet werden, welche zur Bearbeitung des Werkstücks von der Steuereinrichtung ausgewählt wurde. Abhängig beispielsweise von der erfassten Endhöhe der beschichteten Fläche des Werkstücks kann so eine effiziente Zustellung des Schleifwerkzeuges in der jeweiligen Schleifvorrichtung an das Werkstück erfolgen.

Insbesondere aus dem Ausführungsbeispiel gemäß Fig. 3 ist zu ersehen, dass selbst bei größeren, eventuell notwendigen Kapazitätserweiterungen nicht nur einzelne Beschichtungsmodule 20 sondern ganze Modulgruppen 30 mit jeweils mehreren Beschichtungsmodulen 20 und zugehöriger Eingangsmessstation 40 und Ausgangsmessstation 50 einer Gesamtanlage ohne weiteres zugefügt werden können.

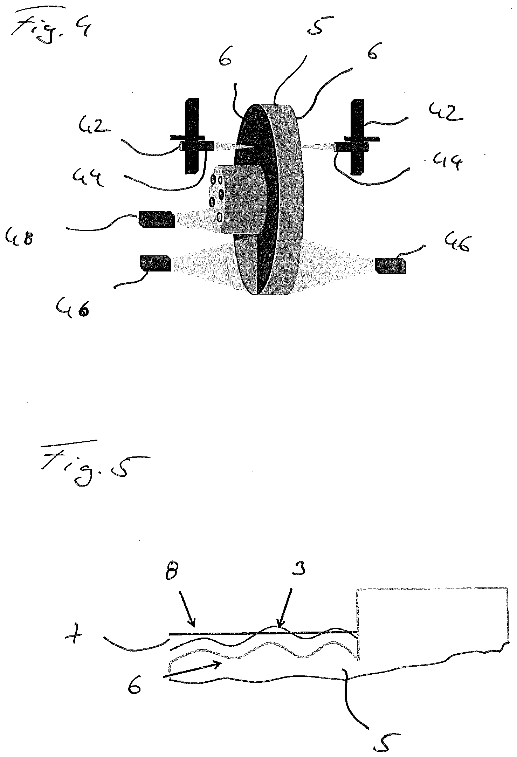

Gemäß Fig. 4 ist eine Messeinrichtung 42 mit zwei Messsensoren 44 beim Vermessen eines Werkstücks 5 vor einem Beschichten dargestellt. Das Werkstück 5 ist dabei eine schematisch dargestellte Bremsscheibe, welche zwei gegenüberliegende zu beschichtende Flächen 6 aufweist. Die sich gegenüberliegenden Sensoren 44, welche jeweils an einem Träger der Messeinrichtung 42 angeordnet sein können, können als Konvokalsensoren oder Triangulationssensoren mit einem Messlaser ausgebildet sein. Vorzugsweise fährt der Sensor 44 zur Erfassung der Oberflächenstruktur 6 genau die Bahn ab, entlang welcher nachfolgend die Auftragseinrichtung 25 zum Auftragen der Beschichtung verfahren wird.

Zur weiteren Erhöhung der Messqualität kann eine Zeilenkamera angeordnet sein, welche einen radialen Bereich der Fläche 6 des Werkstücks 5 überstreicht. Diese Messanordnung kann sowohl in der Eingangsmessstation 40 als auch in der Ausgangsmessstation 52 vorgesehen sein.

In Fig. 5 ist stark schematisiert ein Teil eines Werkstücks 5 nach dem Beschichten dargestellt. Die zu beschichtende Fläche 6 des Werkstücks 5 weist eine Oberflächenkontur mit Höhen und Tiefen auf, welche übertrieben in Fig. 5 dargestellt sind. Mit dem Bezugszeichen 3 ist ein schematischer Oberflächenverlauf einer Beschichtung angegeben, wenn diese nach einem herkömmlichen Verfahren einheitlich aufgetragen werden würde. Dabei würden sich die Höhen und Tiefen der zu beschichtenden Fläche 6 auch auf die beschichtete Oberfläche mit dem Oberflächenverlauf 3 abzeichnen.

Durch das erfindungsgemäße Verfahren kann auf die zu beschichtende Fläche 6 in den Bereichen von Tiefen mehr Material und in den Bereichen von Höhen weniger Material aufgebracht werden, so dass sich eine Beschichtung 7 mit einer im Wesentlichen ebenen Oberfläche 8 ergibt.

Mit dem erfindungsgemäßen Verfahren und der erfindungsgemäßen Anlage kann so eine hochqualitative Beschichtung besonders wirtschaftlich aufgetragen werden.

## Patentansprüche

1. Verfahren zum metallischen Beschichten mindestens einer Fläche (6) eines Werkstücks (5), bei dem
- vor dem Beschichten eine Oberflächenstruktur mit Höhen und Tiefen der zu beschichtenden Fläche (6) mittels einer Messeinrichtung (42) erfasst wird,
- das Beschichten mittels mindestens einer Auftragseinrichtung (25) durchgeführt wird, welche relativ zu der Fläche (6) bewegt und dabei Beschichtungsmaterial aufgebracht wird,
**dadurch gekennzeichnet,**
- **dass** die Auftragseinrichtung (25) von einer Steuereinrichtung abhängig von der erfassten Oberflächenstruktur gesteuert wird, wobei im Bereich von Tiefen mehr Material und im Bereich von Höhen weniger Material aufgebracht wird,
- **dass** das Beschichten als ein Laserauftragsschweißen durchgeführt wird,
- **dass** beim Laserauftragsschweißen mittels der Auftragseinrichtung (25) Metallpulver auf die zu beschichtende Fläche (6) aufgetragen wird und
- **dass** mittels eines Lasers das aufgebrachte Metallpulver lokal aufgeschmolzen wird, wobei die Beschichtung (7) gebildet wird, und
- **dass** beim Beschichten die Menge des aufgebrachten Metallpulvers und/oder eine Leistung des Lasers durch die Steuereinrichtung gesteuert werden.

2. Verfahren nach Anspruch 1,
**dadurch gekennzeichnet,**
**dass** beim Beschichten eine im Wesentlichen ebene Oberfläche (8) gebildet wird.

3. Verfahren nach einem der Ansprüche 1 bis 2,
**dadurch gekennzeichnet,**
**dass** zumindest zwei Auftragseinrichtungen (25) gleichzeitig an dem Werkstück (5) eine Beschichtung (7) auftragen.

4. Verfahren nach Anspruch 3,
**dadurch gekennzeichnet,**
**dass** das Werkstück (5) scheibenförmig oder plattenförmig gebildet ist und
**dass** ein Beschichten an zwei gegenüberliegenden Flächen (6) erfolgt.

5. Verfahren nach Anspruch 4,
**dadurch gekennzeichnet,**
**dass** sich die Auftragseinrichtungen (25) unmittelbar gegenüberliegen und das Beschichten auf beiden Seiten gleichzeitig durchgeführt wird.

6. Verfahren nach einem der Ansprüche 1 bis 5,
**dadurch gekennzeichnet,**
**dass** beim Beschichten die zu beschichtende Fläche (6) etwa parallel zur Schwerkraftwirkung ausgerichtet wird.

7. Verfahren nach einem der Ansprüche 1 bis 6,
**dadurch gekennzeichnet,**
**dass** nach dem Beschichten die beschichtete Fläche (6) mittels einer Ausgangsmesseinrichtung (52) vermessen wird, wobei eine Oberflächenstruktur erfasst wird.

8. Verfahren nach Anspruch 7,
**dadurch gekennzeichnet,**
**dass** eine materialabtragende Nachbearbeitung der beschichteten Fläche durchgeführt wird, wobei ein materialabtragendes Werkzeug abhängig von der in der Ausgangsmesseinrichtung (52) erfassten Oberflächenstruktur an das Werkstück (5) zugeführt wird.

9. Verfahren nach Anspruch 8,
**dadurch gekennzeichnet,**
**dass** das Nachbearbeiten ein Schleifen, Honen, Läppen und/oder Polieren umfasst.

10. Anlage zum metallischen Beschichten mindestens einer Fläche (6) eines Werkstücks (5), insbesondere nach einem Verfahren nach einem der Ansprüche 1 bis 9, mit
- einer Messeinrichtung (42), mit welcher eine Oberflächenstruktur mit Höhen und Tiefen der zu beschichtenden Fläche (6) erfasst wird,
- mindestens einer Auftragseinrichtung (25) zum Auftragen einer Beschichtung, wobei die Auftragseinrichtung (25) beim Beschichten relativ zu der Fläche (6) des Werkstücks (5) bewegbar ist,
**gekennzeichnet durch**
- eine Steuereinrichtung, welche ausgebildet ist, die Auftragseinrichtung (25) abhängig von der erfassten Oberflächenstruktur zu steuern, wobei im Bereich von Tiefen mehr Material und im Bereich von Höhen weniger Material aufgebracht wird, und beim Beschichten die Menge des aufgebrachten Metallpulvers und/oder eine Leistung des Lasers zu steuern,
- wobei die Anlage zum metallischen Beschichten als eine Laserauftragsschweißanlage ausgeführt ist,
- wobei beim Laserauftragsschweißen mittels der Auftragseinrichtung (25) Metallpulver auf die zu beschichtende Fläche (6) aufgetragen wird,
- wobei mittels eines Lasers das aufgebrachte Metallpulver lokal aufgeschmolzen wird, wobei die Beschichtung (7) gebildet wird.

11. Anlage nach Anspruch 10,
**dadurch gekennzeichnet,**
**dass** eine Ausgangsmesseinrichtung (52) vorgesehen ist, durch welche eine Oberflächenstruktur der beschichteten Fläche (6) erfassbar ist.

12. Anlage nach Anspruch 10 oder 11,
**dadurch gekennzeichnet,**
**dass** eine Nachbearbeitungsstation (64) mit mindestens einer materialabtragenden Bearbeitungsvorrichtung (66) angeordnet ist.

## Claims

1. Method for metal-coating at least one surface (6) of a workpiece (5), in which
- before coating, a surface structure with peaks and troughs in the surface (6) to be coated is detected by means of a measuring apparatus (42),
- the coating is carried out by means of at least one deposition apparatus (25), which is moved relative to the surface (6) and coating material is applied in the process,
**characterized in that**
- the deposition apparatus (25) is controlled by a control apparatus on the basis of the detected surface structure, wherein more material is applied in the region of troughs and less material is applied in the region of peaks,
- **in that** the coating is carried out as laser deposition welding,
- **in that** during the laser deposition welding, metal powder is deposited on the surface (6) to be coated by means of the deposition apparatus (25) and
- **in that**, by means of a laser, the applied metal powder is locally melted, with the coating (7) being formed, and
- **in that** during the coating, the quantity of applied metal powder and/or a power of the laser is controlled by the control apparatus.

2. Method according to claim 1,
**characterized in that**
a substantially level surface (8) is formed during the coating.

3. Method according to any of claims 1 to 2,
**characterized in that**
at least two deposition apparatuses (25) simultaneously deposit a coating (7) on the workpiece (5).

4. Method according to claim 3,
**characterized in that**
the workpiece (5) is disc-shaped or planar and
**in that** a coating is carried out on two opposite surfaces (6).

5. Method according to claim 4,
**characterized in that**
the deposition apparatuses (25) are directly opposite to one another and the coating is carried out on both sides simultaneously.

6. Method according to any of claims 1 to 5,
**characterized in that**
during the coating, the surface (6) to be coated is oriented approximately in parallel with the gravitational force.

7. Method according to any of claims 1 to 6,
**characterized in that**
after the coating, the coated surface (6) is measured by means of an output measuring apparatus (52), with a surface structure being detected.

8. Method according to claim 7,
**characterized in that**
material-removing post-processing of the coated surface is carried out, wherein a material-removing tool is brought to the workpiece (5) depending on the surface structure detected in the output measuring apparatus (52).

9. Method according to claim 8,
**characterized in that**
the post-processing includes grinding, honing, lapping and/or polishing.

10. System for the metal-coating of at least one surface (6) of a workpiece (5), in particular according to a method according to any of claims 1 to 9, comprising
- a measuring apparatus (42), by means of which a surface structure with peaks and troughs in the surface (6) to be coated is detected,
- at least one deposition apparatus (25) for depositing a coating, wherein the deposition apparatus (25) can be moved relative to the surface (6) of the workpiece (5) during the coating,
**characterized in that**
- a control apparatus, which is designed to control the deposition apparatus (25) on the basis of the detected surface structure, wherein more material is applied in the region of troughs and less material is applied in the region of peaks and to control the quantity of applied metal powder and/or a power of the laser during the coating,
- wherein the system for metallic coating is designed as a laser deposition welding system,
- wherein during the laser deposition welding, metal powder is deposited on the surface (6) to be coated by means of the deposition apparatus (25)
- wherein, by means of a laser, the applied metal powder is locally melted, with the coating (7) being formed.

11. System according to claim 10,
**characterized in that**
an output measuring apparatus (52) is provided, by means of which a surface structure of the coated surface (6) can be detected.

12. System according to claim 10 or 11,
**characterized in that**
a post-processing station (64) comprising at least one material-removing processing device (66) is arranged.

## Revendications

1. Procédé de revêtement métallique d'au moins une face (6) d'une pièce (5), où
- avant le revêtement, une structure superficielle avec des parties hautes et des parties basses de la face (6) à revêtir est saisie au moyen d'un dispositif de mesure (42),
- le revêtement est mis en œuvre au moyen d'au moins un dispositif d'application (25), lequel est déplacé par rapport à la face (6) et du matériau de revêtement est appliqué ce faisant,
**caractérisé en ce que**
- le dispositif d'application (25) est commandé par un dispositif de commande en fonction de la structure superficielle saisie, dans lequel une quantité de matériau plus importante est appliquée dans la zone des parties basses et une quantité moindre de matériau est appliquée dans la zone des parties hautes,
- **en ce que** le revêtement est mis en œuvre en tant qu'un placage au laser,
- **en ce que** de la poudre métallique est appliquée sur la face (6) à revêtir au moyen du dispositif d'application (25) lors du placage au laser, et
- **en ce que** la poudre métallique appliquée est localement fondue au moyen d'un laser, le revêtement (7) étant ainsi formé, et
- **en ce que** lors du revêtement, la quantité de la poudre métallique appliquée et/ou une puissance du laser sont commandées par le dispositif de commande.

2. Procédé selon la revendication 1,
**caractérisé en ce que**
lors du revêtement, une surface (8) sensiblement plane est formée.

3. Procédé selon l'une des revendications 1 à 2,
**caractérisé en ce que**
au moins deux dispositifs d'application (25) appliquent simultanément sur la pièce (5) un revêtement (7).

4. Procédé selon la revendication 3,
**caractérisé en ce que**
la pièce (5) est formée en forme de disque ou en forme de plaque et
**en ce qu'**un revêtement est effectué sur deux faces (6) opposées.

5. Procédé selon la revendication 4,
**caractérisé en ce que**
les dispositifs d'application (25) se font face directement et le revêtement est mis en œuvre simultanément sur les deux côtés.

6. Procédé selon l'une des revendications 1 à 5,
**caractérisé en ce que**
lors du revêtement, la face (6) à revêtir est orientée de manière à peu près parallèle par rapport à l'effet de la gravité.

7. Procédé selon l'une des revendications 1 à 6,
**caractérisé en ce que**
après le revêtement, la face (6) revêtue est mesurée au moyen d'un dispositif de mesure de départ (52), dans lequel une structure superficielle est saisie.

8. Procédé selon la revendication 7,
**caractérisé en ce que**
un usinage ultérieur par enlèvement de matériau de la face revêtue est mis en œuvre, dans lequel un outil d'enlèvement de matériau est rapproché de la pièce (5) en fonction de la structure superficielle détectée dans le dispositif de mesure de départ (52).

9. Procédé selon la revendication 8,
**caractérisé en ce**
**que** l'usinage ultérieur comprend un meulage, un pierrage, un rodage et/ou un polissage.

10. Installation pour le revêtement métallique d'au moins une face (6) d'une pièce (5), en particulier selon un procédé selon l'une des revendications 1 à 9, comportant :
- un dispositif de mesure (42), avec lequel une structure superficielle avec des parties hautes et des parties basses de la face (6) à revêtir est détectée,
- au moins un dispositif d'application (25) pour appliquer un revêtement, le dispositif d'application (25) pouvant être déplacé lors du revêtement par rapport à la face (6) de la pièce (5),
**caractérisée par**
- un dispositif de commande qui est réalisé pour commander le dispositif d'application (25) en fonction de la structure superficielle saisie, dans laquelle une quantité de matériau plus importante est appliquée dans la zone de parties basses et une quantité inférieure de matériau est appliquée dans la zone de parties hautes, et pour commander, lors du revêtement, la quantité de la poudre métallique appliquée et/ou une puissance du laser,
- l'installation étant réalisée pour le revêtement métallique en tant qu'installation de placage au laser,
- de la poudre métallique étant appliquée sur la face (6) à revêtir au moyen du dispositif d'application (25) lors du placage au laser,
- la poudre métallique appliquée étant fondue localement au moyen d'un laser, le revêtement (7) étant ainsi formé.

11. Installation selon la revendication 10,
**caractérisée en ce que**
est prévu un dispositif de mesure de sortie (52), par lequel une structure superficielle de la face (6) revêtue peut être saisie.

12. Installation selon la revendication 10 ou 11,
**caractérisée en ce que**
un poste d'usinage ultérieur (64) est disposé avec au moins un système d'usinage (66) d'enlèvement de matériau.
